(19)

Europäisches
Patentamt

European
Patent Office

Office européen
des brevets

(11)  **EP 1 708 347 B1**

(12)  **FASCICULE DE BREVET EUROPEEN**

| | |
|---|---|
| (45) Date de publication et mention<br>de la délivrance du brevet:<br>**28.04.2010 Bulletin 2010/17** | (51) Int Cl.:<br>***H02M 3/335*** *(2006.01)* |

(21) Numéro de dépôt: **06112106.7**

(22) Date de dépôt: **31.03.2006**

(54) **Convertisseur à plusieurs voies, à découpage en cascade et limité en courant**

Strombegrenzender Mehrfachausgang-Spannungswandler mit kaskadierter Taktung

Current-limited multi-output converter with cascated commutation

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **01.04.2005 FR 0503216**

(43) Date de publication de la demande:
**04.10.2006 Bulletin 2006/40**

(73) Titulaire: **AEG Power Solutions B.V.
1161 AG Zwanenburg (NL)**

(72) Inventeurs:
 • **Baptiste, Thierry
  22300, Lannion (FR)**
 • **Legendre, Clément
  22450, Kermaria-Sulard (FR)**

(74) Mandataire: **David, Alain et al
Cabinet Beau de Loménie
158, rue de l'Université
75340 Paris Cedex 07 (FR)**

(56) Documents cités:
**EP-A- 0 698 959    US-B1- 6 366 484**

EP 1 708 347 B1

## Description

La présente invention se rapporte au domaine des convertisseurs à plusieurs voies, à découpage en cascade et limités en courant.

## Convertisseurs à plusieurs voies

Un convertisseur à plusieurs voies comprend un transformateur comprenant un enroulement primaire et au moins un enroulement secondaire à l'image de la demande EP-A-0 698 959. Le transformateur peut comprendre plusieurs enroulements secondaires, chaque enroulement secondaire correspondant à une -ou plusieurs- voies. Le transformateur peut également comprendre un seul enroulement secondaire, correspondant aux voies du convertisseur.

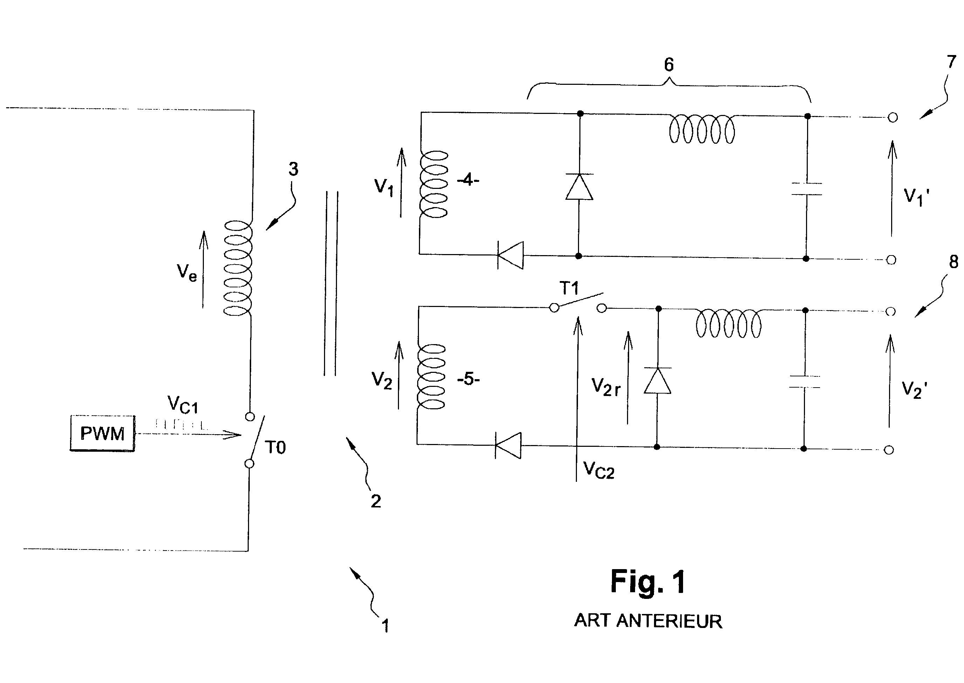

La figure 1 représente schématiquement un exemple de circuit convertisseur à plusieurs voies selon l'art antérieur.

Outre un transformateur 2 comprenant un enroulement primaire 3, un enroulement secondaire principal 4 et un enroulement secondaire adjoint 5, le convertisseur 1 comprend des premiers moyens d'interruption. Les premiers moyens d'interruption peuvent comprendre un interrupteur T0, par exemple un transistor, relié à l'enroulement primaire 3.

L'interrupteur T0 permet de découper une tension sensiblement continue (non représentée) selon un premier signal périodique en créneau Vc1 pour former un signal d'entrée Ve. L'interrupteur T0 est commandé par un dispositif de contrôle primaire PWM (comme Pulse Width Modulation en anglais) qui contrôle la largeur des créneaux du premier signal périodique en créneau Vc1.

Le convertisseur 1 comprend par ailleurs des moyens de démagnétisation (non représentés), par exemple un clamp actif (active clamp en anglais), par résonance (resonant reset en anglais) ou encore par un enroulement de démagnétisation. La moyenne sur une période du signal d'entrée Ve est sensiblement nulle. Le signal d'entrée Ve présente une phase en roue libre, correspondant aux temps pendant lesquels le premier signal périodique en créneau Vc1 est sensiblement nul, et une phase directe sensiblement pendant les créneaux du premier signal périodique en créneau Vc1.

Un premier signal de sortie V1 sur une voie principale 7 a une amplitude sensiblement proportionnelle à l'amplitude du signal d'entrée Ve. Un circuit redresseur - moyenneur 6 permet d'obtenir un signal continu principal V1' à partir du premier signal de sortie V1. La valeur de la tension du signal continu principal V1' est fonction du rapport cyclique du premier signal périodique en créneaux Vc1.

## Convertisseurs à découpage en cascade

Le convertisseur est à découpage en cascade, c'est à dire que le convertisseur comprend, outre les premiers moyens d'interruption, des seconds moyens d'interruption à l'entrée de l'une des voies, ici un interrupteur adjoint T1. Ainsi, le dispositif permettant d'obtenir un signal continu adjoint V2' à partir d'un second signal de sortie V2 sur une voie adjointe 8 est presque identique au circuit redresseur - moyenneur 6, à ceci près que l'interrupteur adjoint T1 permet de découper selon un second signal périodique en créneau Vc2 le second signal de sortie V2. Le second signal de sortie V2 a une amplitude sensiblement proportionnelle à l'amplitude du signal d'entrée Ve.

Le second signal périodique en créneau Vc2 présente par exemple des créneaux d'une largeur inférieure à la largeur des créneaux du premier signal périodique en créneau Vc1, les créneaux du second signal périodique en créneau Vc2 se terminant par exemple en même temps que les créneaux du premier signal périodique en créneau Vc1. Un signal découpé V2r aura donc une valeur en tension non nulle seulement pendant les créneaux du second signal périodique en créneau Vc2. Le signal découpé V2r aura donc une forme sensiblement de signal périodique en créneau, les créneaux du signal découpé ayant une largeur inférieure aux créneaux du premier signal périodique en créneau Vc1.

Le signal continu adjoint V2' est ensuite obtenu par redressement et moyennage du signal module V2r. La valeur du signal continu adjoint V2' dépend donc dans cet exemple du retard des fronts montants du second signal périodique en créneau Vc2 relativement aux fronts montants du premier signal périodique en créneau Vc1.

## Limitation de courant

Le convertisseur peut comprendre un dispositif de limitation de courant (non représenté), afin de protéger les composants.

La limitation de courant est fréquemment effectuée au secondaire, c'est à dire que le courant dans la voie principale est mesuré par exemple en utilisant une résistance de mesure, dite shunt. La tension aux bornes de la résistance de mesure est mémorisée, traitée et transmise via un optocoupleur au dispositif de contrôle primaire. Le dispositif de contrôle primaire modifie la valeur du rapport cyclique des créneaux du premier signal périodique en créneau Vc1 en fonction de la valeur du courant mesurée dans la voie principale. Une telle boucle permet de réguler le courant dans la voie principale avec une précision relativement élevée.

De même, le courant dans la voie adjointe est mesuré et la valeur du rapport cyclique du second signal périodique en créneau Vc2 est ajustée ou modifiée en fonction de la valeur du courant mesuré.

La limitation de courant peut également être effectuée au primaire. Une mesure du courant traversant l'enroulement primaire, dit courant primaire, est effectuée. Un tel dispositif de limitation de courant comprend une seule résistance de mesure et est par conséquent moins volumineux et moins cher qu'un dispositif de limitation de courant au secondaire.

La valeur mesurée du courant primaire donne un renseignement global sur plusieurs voies. La valeur du rapport cyclique des créneaux du premier signal périodique en créneau Vc1 est ajustée en fonction de la valeur du courant primaire.

Toutefois, si par exemple l'une des voies est coupée ou à vide, le courant traversant cette voie sera nul. Du fait du principe de la conversion de l'énergie dans le transformateur, il se peut, en particulier lorsque les puissances à chacune des voies sont très différentes, que la limitation en courant n'intervienne que lorsque le courant dans la voie restante est relativement élevé. La limitation en courant peut alors se révéler inutile quant à la protection des composants.

La présente invention permet une limitation du courant au primaire dans les circuits convertisseurs à plusieurs voies avec un meilleur contrôle du courant dans chaque voie.

### Convertisseur selon l'invention

La présente invention a pour objet un convertisseur à plusieurs voies comprenant :

- un transformateur comprenant un enroulement primaire et au moins un enroulement secondaire,

- des premiers moyens d'interruption reliés à l'enroulement primaire, les premiers moyens d'interruption permettant de découper selon un premier signal périodique en créneau une tension sensiblement continue pour former un signal d'entrée à l'enroulement primaire, le signal d'entrée présentant une phase directe et une phase en roue libre,

- des seconds moyens d'interruption à l'entrée de l'une des voies, les seconds moyens d'interruption permettant de découper selon un second signal périodique en créneau un signal de sortie à l'enroulement secondaire correspondant à cette voie,

- des moyens de mesure d'un courant primaire reliés à l'enroulement primaire,

Selon l'invention, le convertisseur comprend par ailleurs:

- des moyens de mémorisation de plusieurs valeurs mesurées correspondant au courant primaire, les valeurs étant mesurées à des temps distincts de la phase directe du signal d'entrée, et

- des moyens de traitement des valeurs mesurées.

Le courant primaire évolue dans le temps, en partie du fait des seconds moyens d'interruptions qui permettent une discontinuité du courant primaire pendant la phase directe. En effectuant deux mesures du courant primaire à des temps différents de la phase directe, et en mémorisant ces deux mesures, le convertisseur selon la présente invention permet une évaluation du courant davantage adaptée aux voies du convertisseur. Les convertisseurs selon l'art antérieur avec une limitation du courant au primaire ne permettent qu'une évaluation globale du courant au secondaire.

En particulier, lorsque le convertisseur selon la présente invention comprend une voie principale, n voies adjointes, des seconds moyens d'interruption pour chacune des voies adjointes, et des moyens de mémorisation de n+1 valeurs mesurées, n étant supérieur ou égal à 1, le courant dans chacune des voies pourra être évalué.

Dans ce cas, le convertisseur selon la présente invention permet également de détecter si le courant dans l'une des voies est nul.

De plus, comme le courant dans chaque voie est alors évalué, la correction peut être effectuée en modifiant le rapport cyclique du premier signal périodique en créneau, mais également au niveau des seconds moyens d'interruption : le convertisseur selon la présente invention permet une réponse adaptée à chacune des voies.

La présente invention n'est toutefois pas limitée aux convertisseurs comprenant n+1 voies, n seconds moyens d'interruption et des moyens de mémorisation de n+1 valeurs mesurées, n étant supérieur ou égal à un. Par exemple, un convertisseur comprenant trois voies, des seconds moyens d'interruption pour une ou deux des voies, et des moyens de mémorisation de deux valeurs mesurées seulement, permet d'évaluer deux courants : par exemple un courant global et le courant dans l'une des voies.

Les moyens de mémorisation peuvent également permettre de mémoriser plus de valeurs mesurées que le convertisseur ne comprend de voies.

Par temps distincts de la phase directe, on entend que chaque temps de mesure est choisi tels que le signal d'entrée est alors dans une phase directe, et que les temps de mesure modulo la périodicité du premier signal de commande en créneau sont distincts entre eux. Les mesures du courant primaire sont avantageusement réalisées dans une même phase directe du signal d'entrée, mais rien ne s'oppose à ce qu'une première mesure soit effectuée pendant une première phase directe du signal d'entrée, tandis qu'une seconde mesure est effectuée pendant une seconde phase directe du signal d'entrée, pourvu que les temps de mesure relativement à chaque phase directe soient distincts.

Les moyens de traitement des valeurs mesurées sont avantageusement reliés à des moyens de commande de moyens d'interruption choisis parmi les premiers moyens d'interruption et les seconds moyens d'interruption.

La régulation des valeurs des courants est ainsi effectuée en contrôlant le ou les rapports cycliques. Avantageusement, les moyens de traitement permettent de contrôler les premiers moyens d'interruption et les seconds moyens d'interruption, de façon à fournir une réponse aussi adaptée que possible. Alternativement, seul l'un ou l'autre des moyens d'interruption est contrôlé.

La présente invention n'est pas limitée par la manière dont le contrôle est mis en oeuvre. Les moyens de traitement peuvent par exemple être reliés à des moyens de commande d'un circuit électronique de façon à contrôler la fonction de transfert de ce circuit électronique.

Le convertisseur selon la présente invention comprend avantageusement strictement deux voies.

La limitation de courant est ainsi relativement simple à effectuer, puisque deux mesures du courant primaire suffisent pour évaluer le courant dans chacune des voies.

Toutefois, le convertisseur peut comprendre plus de deux voies.

Par exemple, le convertisseur peut comprendre trois voies, chaque voie correspondant à un enroulement secondaire. Le convertisseur comprend les seconds moyens d'interruption à l'entrée d'une première voie adjointe, ainsi que des troisièmes moyens d'interruption à l'entrée d'une seconde voie adjointe. Les seconds moyens d'interruption permettent de découper un signal de sortie à un second enroulement secondaire correspondant à la première voie adjointe, formant par-là un premier signal découpé. Le premier signal découpé présente des créneaux d'une largeur réduite relativement à la durée des phases directes du signal d'entrée. Les troisièmes moyens d'interruption permettent également de découper un signal de sortie à un troisième enroulement secondaire correspondant à la seconde voie adjointe, formant par-là un second signal découpé. La largeur des créneaux du second signal découpé est par exemple inférieure à la largeur des créneaux du premier signal découpé. Les moyens d'interruption sont par exemple commandés de telle sorte que les phases directes des signaux de sortie se terminent en même temps que les créneaux du premier signal découpé et du second signal découpé.

Avec un tel convertisseur, le courant primaire évolue dans le temps avec deux sauts discrets, chaque saut discret correspondant au début d'un créneau de l'un des signaux découpés.

Un tel convertisseur peut par exemple comprendre un détecteur de discontinuités, comprenant par exemple un circuit dérivateur, pour repérer les sauts discrets afin d'effectuer une mesure du courant primaire aux temps correspondants. Le convertisseur comprend également des moyens de mémorisation de trois mesures par phase directe du signal d'entrée. Le courant dans chacune des voies est évalué à partir des mesures mémorisées. Les premiers moyens d'interruption, les seconds moyens d'interruption et les troisièmes moyens d'interruption peuvent être commandés en conséquence.

La présente invention n'est donc pas limitée par le nombre de voies du convertisseur, ni par le nombre de mesures effectuées par créneau.

Le second signal périodique en créneau est avantageusement obtenu en utilisant une copie temporelle du premier signal périodique en créneau et en appliquant un retard sur les fronts montants de cette copie temporelle.

Le second signal périodique en créneau présente ainsi des créneaux d'une largeur inférieure à la largeur des créneaux du premier signal périodique en créneau. Les créneaux du premier signal périodique en créneau et les créneaux du second signal périodique en créneau se terminent en même temps. Un tel second signal périodique en créneau est relativement facile à générer Le courant primaire évolue ainsi de manière relativement simple avec un saut discret, lorsque le convertisseur comprend une seule voie adjointe.

La présente invention n'est toutefois pas limitée par la forme du second signal périodique en créneau.

Le convertisseur comprend avantageusement :

- des moyens de détection des fronts montants des créneaux du premier signal périodique,

- des moyens de détection d'une valeur maximum du courant primaire sur chaque créneau du premier signal périodique.

Les moyens de mémorisation comprennent avantageusement :

- des premiers moyens de mémorisation pour mémoriser une première valeur correspondant à la valeur du courant primaire en début de créneau du premier signal périodique, et

- des seconds moyens de mémorisation pour mémoriser une valeur maximum correspondant à la valeur maximum du courant primaire.

La détection des fronts montants et la détection de maxima du courant primaire peuvent être mises en oeuvre relativement facilement, avec des composants simples comme des résistances et des capacités.

La présente invention n'est toutefois pas limitée par la présence des moyens de détection des fronts montants des créneaux du premier signal périodique en créneau, ni par la présence des moyens de détection des maxima du courant primaire. Les moyens de mémorisation peuvent également être utilisés pour mémoriser d'autres valeurs que la première valeur ou la valeur maximum.

Les seconds moyens d'interruption peuvent comprendre un transistor commandé par un dispositif de contrôle.

Un tel composant est en effet couramment utilisé comme interrupteur. Le transistor est simplement commandé par le second signal périodique en créneau.

Alternativement, les seconds moyens d'interruption peuvent comprendre un amplificateur magnétique.

Un tel composant permet en fait d'appliquer un retard aux fronts montants du signal de sortie à l'enroulement secondaire correspondant à la voie des seconds moyens d'interruption, la durée du retard étant contrôlable par une tension de contrôle. Un amplificateur magnétique peut comprendre un matériau amorphe. La présente invention n'est pas limitée par la nature des seconds moyens d'interruption ni par la nature des premiers moyens d'interruption. Les premiers moyens d'interruption peuvent par exemple comprendre un interrupteur, tel qu'un transistor.

Le convertisseur peut comprendre un seul enroulement secondaire.

La voie principale et la voie adjointe sont reliées à cet enroulement secondaire. Les seconds moyens d'interruption permettent de couper temporairement la voie adjointe de l'enroulement secondaire.

Alternativement, le convertisseur peut comprendre plusieurs enroulements secondaires. Par exemple, le convertisseur peut comprendre un enroulement secondaire pour chaque voie du convertisseur.

L'invention est décrite ci-après plus en détail à l'aide de figures ne correspondant qu'à un mode de réalisation préféré de l'invention.

La figure 1, déjà commentée, représente schématiquement un exemple de circuit convertisseur à plusieurs voies et à découpage en cascade selon l'art antérieur.

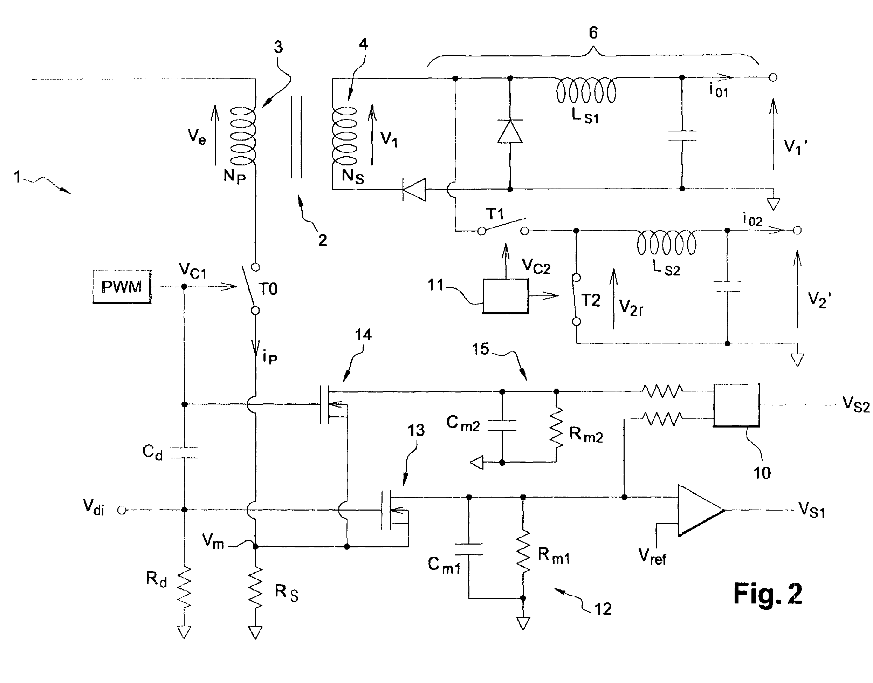

La figure 2 représente schématiquement un exemple de circuit convertisseur à plusieurs voies, à découpage en cascade et limité en courant selon un mode de réalisation préféré de la présente invention.

La figure 3 est un exemple de chronogramme d'un premier signal périodique en créneau selon le mode de réalisation préféré de la présente invention.

La figure 4 est un exemple de chronogramme d'un signal d'entrée selon le mode de réalisation préféré de la présente invention.

La figure 5 est un exemple de chronogramme d'un signal de sortie à l'enroulement secondaire selon le mode de réalisation préféré de la présente invention.

La figure 6 est un exemple de chronogramme d'un second signal périodique en créneau selon le mode de réalisation préféré de la présente invention.

La figure 7 est un exemple de chronogramme d'un signal découpé par les seconds moyens d'interruption selon le mode de réalisation préféré de la présente invention.

La figure 8 est un exemple de chronogramme d'un signal proportionnel au courant primaire selon le mode de réalisation préféré de la présente invention.

On notera que des éléments ou parties identiques ou similaires ont été désignés par les mêmes signes de référence sur les différentes figures. Les diverses valeurs choisies ne sont qu'indicatives.

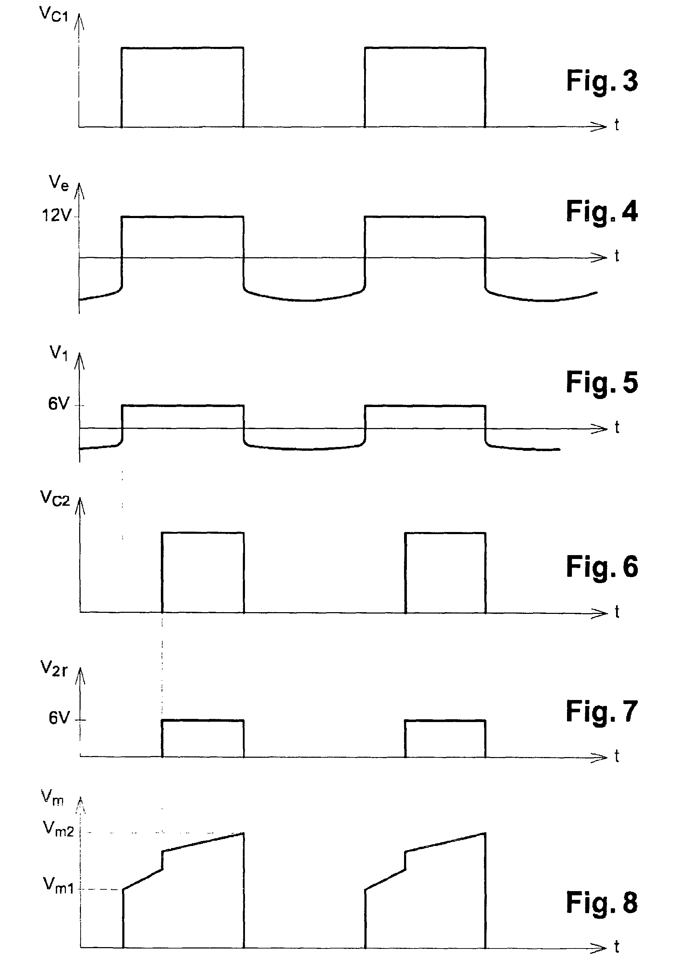

Le circuit convertisseur 1 comprend un transformateur 2 comprenant un enroulement primaire 3 et un enroulement secondaire 4. Des premiers moyens d'interruption, ici l'interrupteur T0, permettent de découper une tension d'entrée sensiblement continue (non représentée) selon un premier signal périodique en créneau Vc1, représenté sur le chronogramme de la figure 3, pour former un signal d'entrée Ve, représenté sur le chronogramme de la figure 4.

Le signal d'entrée Ve présente des phases directes pendant le temps des créneaux du premier signal périodique en créneau Vc1, et des phases en roue libre lorsque le premier signal périodique en créneau Vc1 est sensiblement nul.

Le transformateur 2 permet d'obtenir à partir du signal d'entrée Ve, un signal de sortie à l'enroulement secondaire V1, représenté sur le chronogramme de la figure 5. L'amplitude en tension du signal de sortie du transformateur à l'enroulement secondaire V1 est sensiblement proportionnelle à l'amplitude en tension du signal d'entrée Ve. Dans cet exemple, le nombre de spires au primaire Np est le double du nombre de spires au secondaire Ns, de telle sorte qu'en phase directe en particulier, l'amplitude du signal d'entrée Ve est le double de celle du signal de sortie à l'enroulement secondaire V1.

Un circuit redresseur -moyenneur 6 permet d'obtenir un signal continu principal V1' à partir du signal de sortie à l'enroulement secondaire V1. Dans cet exemple, les créneaux du premier signal périodique en créneau Vc1 ont une durée sensiblement égale à une demi-période, de telle sorte que pour un signal d'entrée Ve d'amplitude de 12V environ en phase directe, l'amplitude du signal de sortie à l'enroulement secondaire V1 est de 6V environ en phase directe et le signal continu principal V1' a une amplitude de 3V environ.

Le convertisseur est à découpage en cascade, c'est à dire que des seconds moyens d'interruption, ici un second interrupteur T1 et un troisième interrupteur T2 fonctionnant en alternance, permettent de découper le signal de sortie à l'enroulement secondaire V1 selon un second signal périodique en créneau Vc2.

Dans le mode de réalisation préféré, chaque interrupteur comprend un transistor.

Le second signal périodique en créneau Vc2, représenté sur le chronogramme de la figure 6, est ici obtenu en utilisant une copie temporelle du premier signal périodique en créneau Vc1 et en appliquant un retard d'un sixième de période aux fronts montants de cette copie. Un dispositif de contrôle 11 des second et troisième interrupteurs T1 et T2 est ainsi relié à un dispositif de contrôle primaire PWM (comme Pulse Width Modulation en anglais) qui contrôle la largeur des créneaux du premier signal périodique en créneau Vc1.

Lorsque le second signal périodique en créneau Vc2 est nul, le second interrupteur T1 est ouvert et le troisième interrupteur T2 est fermé, de telle sorte qu'un signal découpé V2r, représenté sur le chronogramme de la figure 7, est alors nul. Durant les créneaux du second signal périodique en créneau Vc2, le second interrupteur T1 est fermé et le troisième interrupteur T2 est ouvert, de telle sorte que le signal découpé V2r a alors sensiblement la même amplitude que le signal de sortie à l'enroulement secondaire V1.

Le signal découpé V2r présente ainsi des créneaux d'une durée inférieure à la durée des phases directes du signal de sortie à l'enroulement secondaire V1. Après moyennage, un signal continu adjoint V2' aura une amplitude plus faible que l'amplitude du signal continu principal V1', ici 2V environ.

Le courant primaire $i_p$ circulant dans l'enroulement primaire 3 peut être mesuré par l'intermédiaire d'une tension de mesure Vm aux bornes d'une résistance de mesure Rs. La tension de mesure Vm, illustrée sur le chronogramme de la figure 8, évolue dans le temps différemment selon les états des interrupteurs T0, T1 et T2.

Lorsque le premier interrupteur T0 est ouvert, la tension de mesure Vm est nulle.

Lorsque le premier interrupteur T0 est fermé et que le second interrupteur T1 est ouvert, le courant primaire $i_p$ obéit grossièrement à une équation du type :

$$i_p = i_{01} \times \frac{Ns}{Np} + \left(\frac{Ve}{Lp} - \frac{Ns}{Np}\frac{V1'-V1}{Ls1}\right)t \,,$$

où $i_{01}$ désigne le courant dans la voie principale,

t désigne le temps, le temps étant choisi comme nul au début de la phase directe considérée,

Lp désigne l'inductance de l'enroulement primaire 3, et

Ls1 désigne l'inductance du circuit redresseur - moyenneur 6 de la voie principale.

Lorsque, le premier interrupteur T0 étant toujours fermé, le second interrupteur T1 est fermé, le courant primaire, $i_p$ obéit grossièrement à une équation du type :

$$i_p = i_{01} \times \frac{Ns}{Np} + \left(\frac{Ve}{Lp} - \frac{Ns}{Np}\frac{V1'-V1}{Ls1}\right)t + i_{02} \times \frac{Ns}{Np} - \frac{Ns}{Np}\frac{V2'-V_{2r}}{Ls2}t$$

où

$i_{02}$ désigne le courant dans la voie adjointe, et

$L_{S2}$ désigne l'inductance du circuit moyenneur de la voie adjointe.

En effectuant une première mesure du courant primaire $i_p$ en début de créneau du premier signal périodique en créneau Vc1 et une seconde mesure du courant primaire $i_p$ en fin de créneau, on peut estimer le courant circulant dans la voie principale ainsi que la somme des courants circulant dans la voie principale et dans la voie secondaire. Des moyens de traitement, comprenant ici un amplificateur différentiel 10, permettent d'estimer le courant dans la voie adjointe.

Les moyens de traitement sont reliés au dispositif de contrôle primaire PWM et au dispositif de contrôle 11, respectivement via un signal de contrôle principal Vs1 et un signal de contrôle adjoint Vs2.

Les mesures du courant primaire $i_p$ sont ici réalisées en début de créneau et en fin de créneau. Le convertisseur 1 comprend des moyens de détection des fronts montants des créneaux du premier signal périodique pour repérer le début des créneaux du courant primaire.

Les moyens de détection des fronts montants des créneaux du premier signal périodique en créneau comprennent ici une résistance de détection Rd et une capacité de détection Cd montées en série. La tension de détection Vdf aux bornes de la résistance de détection Rd connaît un maximum à chaque front montant du premier signal périodique Vc1. La tension de détection Vdf commande l'état d'un premier transistor 13, lui-même situé entre la résistance de mesure Rs et des premiers moyens de mémorisation 12. Les premiers moyens de mémorisation 12 comprennent ici une première résistance de mémorisation Rm1 et une première capacité de mémorisation Cm1 montées en parallèle. A chaque créneau du premier signal périodique en créneau, la tension aux bornes de la capacité de mémorisation Cm1 prend sensiblement la valeur de la tension de mesure Vm lorsque la tension de détection Vdf est à son maximum, c'est à dire en début de créneau du premier signal périodique en créneau Vc1. Les premiers moyens de mémorisation 12 permettent ainsi de mémoriser une première valeur de tension Vm1 correspondant à la valeur du courant primaire en début de créneau du premier signal périodique en créneau Vc1.

Pour détecter la fin de chaque créneau du premier signal périodique en créneau Vc1, un second transistor 14 est commandé directement par le premier signal périodique Vc1. Le second transistor 14 relie des seconds moyens de mémorisation 15 à la résistance de mesure Rs. Les seconds moyens de mémorisation 15 comprennent une seconde résistance de mémorisation $R_{m2}$ et une seconde capacité de mémorisation $C_{m2}$ montées en parallèle. Le second transistor 14 est passant tant que dure le créneau du premier signal périodique en créneau Vc1, c'est-à-dire que les moyens de mémorisation 15 gardent en mémoire, à chaque période, la valeur maximale Vm2 de la tension de mesure Vm. La valeur maximum du courant primaire $i_p$ est donc détectée et mémorisée pour chaque créneau du premier signal périodique en créneau Vc1. Le courant primaire $i_p$ étant dans ce mode de réalisation maximum en fin de créneau, on a ainsi réalisé une mesure du courant primaire $i_p$ en fin de créneau.

La première valeur Vm1 et la valeur maximale Vm2 ainsi mémorisées sont ensuite traitées afin d'évaluer le courant dans chacune des voies, de manière à permettre ensuite un contrôle adapté.

## Revendications

1.  Convertisseur (1) à plusieurs voies comprenant
    un transformateur (2) comprenant un enroulement primaire (3) et au moins un enroulement secondaire (4),
    des premiers moyens d'interruption (T0) reliés à l'enroulement primaire, les premiers moyens d'interruption permettant de découper selon un premier signal périodique en créneau (Vc1) une tension sensiblement continue pour former un signal d'entrée (Ve), le signal d'entrée présentant une phase directe et une phase en roue libre ,
    des seconds moyens d'interruption (T1, T2) à l'entrée de l'une des voies, les seconds moyens d'interruption permettant de découper selon un second signal périodique en créneau (Vc2) un signal de sortie à l'enroulement secondaire (V1) correspondant à cette voie,
    des moyens de mesure (Rs) d'un courant primaire ($i_p$) reliés à l'enroulement primaire,
    **caractérisé en ce que** le convertisseur comprend par ailleurs des moyens de mémorisation (12, 15) de plusieurs valeurs mesurées correspondant au courant primaire, les valeurs étant mesurées à des temps distincts de la phase directe du signal d'entrée,
    des moyens de traitement (10) des valeurs mesurées.

2.  Convertisseur (1) selon la revendication 1, dans lequel
    les moyens de traitement (10) sont reliés à des moyens de commande de moyens d'interruption choisis parmi les premiers moyens d'interruption (T0) et les seconds moyens d'interruption (T1, T2).

3.  Convertisseur (1) selon l'une des revendications 1 ou 2, comprenant strictement deux voies.

4.  Convertisseur (1) selon la revendication 3, dans lequel

le second signal périodique en créneau (Vc2) est obtenu en utilisant une copie temporelle du premier signal périodique en créneau (Vc1) et en applicant un retard sur les fronts montants de cette copie temporelle.

5. Convertisseur (1) selon la revendication 4, comprenant
des moyens de détection des fronts montants des créneaux du premier signal périodique en créneau (Vc1),
des moyens de détection d'une valeur maximum du courant primaire ($i_p$) sur chaque créneau du premier signal périodique en créneau,
et dans lequel les moyens de mémorisation comprennent des premiers moyens de mémorisation (12) pour mémoriser une première valeur (Vm1) correspondant à la valeur du courant primaire en début de créneau du premier signal périodique en créneau, et
des seconds moyens de mémorisation (15) pour mémoriser une valeur maximum (Vm2) correspondant à la valeur maximum du courant primaire.

6. Convertisseur (1) selon l'une des revendications précédentes, dans lequel
les seconds moyens d'interruption (T1, T2) comprennent un transistor commandé par un dispositif de contrôle (11).

7. Convertisseur selon l'une des revendications 4 à 5, dans lequel
les seconds moyens d'interruption comprennent un amplificateur magnétique.

8. Convertisseur (1) selon l'une des revendications précédentes, comprenant un seul enroulement secondaire (4).

9. Convertisseur selon l'une des revendications précédentes, comprenant un enroulement secondaire pour chaque voie du convertisseur.

**Claims**

1. A converter (1) having a plurality of channels and comprising:

   a transformer (2) comprising a primary winding (3) and at least one secondary winding (4);
   first switch means (T0) connected to the primary winding, the first switch means serving to chop a substantially DC voltage in compliance with a first squarewave periodic signal (Vc1) so as to form an input signal (Ve), the input signal presenting a positive sequence phase and a freewheel phase;
   second switch means (T1, T2) at the input of one of the channels, the second switch means serving to chop an output signal at the secondary winding corresponding to said channel in compliance with a second squarewave periodic signal (Vc2); and
   measurement means (Rs) for measuring a primary current (ip) and connected to the primary winding;
   **characterized in that** the converter further comprises:

   storage means (12, 15) for storing a plurality of measured values corresponding to the primary current, the values being measured at distinct times during the positive sequence phase of the input signal; and
   processor means (10) for processing the measured values.

2. A converter according to claim 1, in which the processor means (10) are connected to control means for controlling the switch means, the switch means being selected from the first switch means (T0) and the second switch means (T1, T2).

3. A converter according to claim 1 or claim 2, having exactly two channels.

4. A converter according to claim 3, in which the second squarewave periodic signal (Vc2) is obtained by using a time copy of the first squarewave periodic signal (Vc1) and by applying a delay to the rising fronts of said time copy.

5. A converter according to claim 4, comprising:

   means for detecting the rising fronts of the pulses of the first squarewave periodic signal (Vc1);
   means for detecting a maximum value of the primary current during each pulse of the first squarewave periodic signal; and
   in which the storage means comprise:

first storage means (12) for storing a first value (Vm1) corresponding to the value of the primary current at the beginning of a pulse in the first squarewave periodic signal; and

second storage means (15) for storing a maximum value (Vm2) corresponding to the maximum value of the primary current.

6. A converter according to any one of the preceding claims, in which the second switch means (T1, T2) comprise a transistor controlled by a control device (11).

7. A converter according to claim 4 or claim 5, in which the second switch means comprise a magnetic amplifier.

8. A converter according to any one of the preceding claims, and having only one secondary winding (4).

9. A converter according to any one of the preceding claims, and having one secondary winding for each channel of the converter.

**Patentansprüche**

1. Mehrwegewandler (1) mit

- einem Transformator (2), der eine Primärwicklung (3) und wenigstens eine Sekundärwicklung (4) aufweist,
- ersten Unterbrechungsmitteln (T0), die mit der Primärwicklung verbunden sind, wobei die ersten Unterbrechungsmittel ermöglichen, entsprechend einem ersten periodischen Rechtecksignal (Vc1) eine im wesentlichen gleichbleibende Spannung zu zerhacken, um ein Eingangssignal (Ve) zu bilden, wobei das Eingangssignal eine direkte Phase und eine Freilaufphase aufweist,
- zweiten Unterbrechungsmitteln (T1, T2) am Eingang von einem der Wege, wobei die zweiten Unterbrechungsmittel ermöglichen, entsprechend einem zweiten periodischen Rechtecksignal (Vc2) ein diesem Weg entsprechendes Ausgangssignal an der Sekundärwicklung (V1) zu zerhacken,
- Mitteln zum Messen (Rs) eines Primärstroms (ip), die mit der Primärwicklung verbunden sind,
**dadurch gekennzeichnet, daß** der Wandler außerdem folgendes umfaßt:
- Mittel zum Speichern (12, 15) mehrerer dem Primärstrom entsprechender Meßwerte, wobei die Werte zu unterschiedlichen Zeitpunkten der direkten Phase des Eingangssignals gemessen werden,
- Mittel zum Verarbeiten (10) der Meßwerte.

2. Wandler (1) nach Anspruch 1, wobei die Verarbeitungsmittel (10) mit Mitteln zum Steuern von Unterbrechungsmitteln, ausgewählt aus den ersten Unterbrechungsmitteln (T0) und den zweiten Unterbrechungsmitteln (T1, T2), verbunden sind.

3. Wandler (1) nach einem der Ansprüche 1 oder 2, der genau zwei Wege umfaßt.

4. Wandler (1) nach Anspruch 3, wobei das zweite periodische Rechtecksignal (Vc2) durch Verwendung einer Zeitkopie des ersten periodischen Rechtecksignals (Vc1) und durch Anlegen einer Verzögerung an die ansteigenden Flanken dieser Zeitkopie erhalten wird.

5. Wandler (1) nach Anspruch 4, der folgendes umfaßt:

- Mittel zum Erfassen der ansteigenden Flanken der Rechtecke des ersten periodischen Rechtecksignals (Vc1),
- Mittel zum Erfassen eines Maximalwertes des Primärstroms (ip) an jedem Rechteck des ersten periodischen Rechtecksignals,
und bei dem die Speichermittel folgendes umfassen:
- erste Speichermittel (12), um einen ersten Wert (Vm1) zu speichern, der dem Wert des Primärstroms am Anfang eines Rechtecks des ersten periodischen Rechtecksignals entspricht, und
- zweite Speichermittel (15), um einen Maximalwert (Vm2) zu speichern, der dem Maximalwert des Primärstroms entspricht.

6. Wandler (1) nach einem der vorhergehenden Ansprüche, wobei die zweiten Unterbrechungsmittel (T1, T2) einen über eine Kontrolleinrichtung (11) gesteuerten Transistor umfassen.

7. Wandler (1) nach einem der Ansprüche 4 bis 5, wobei die zweiten Unterbrechungsmittel einen Magnetverstärker umfassen.

8. Wandler (1) nach einem der vorhergehenden Ansprüche, der eine einzige Sekundärwicklung (4) umfaßt.

9. Wandler (1) nach einem der vorhergehenden Ansprüche, der eine Sekundärwicklung für jeden Weg des Wandlers umfaßt.

**Fig. 1**

ART ANTERIEUR

**Fig. 2**

EP 1 708 347 B1

EP 1 708 347 B1

Fig. 3

Fig. 4

Fig. 5

Fig. 6

Fig. 7

Fig. 8

13

**RÉFÉRENCES CITÉES DANS LA DESCRIPTION**

**Documents brevets cités dans la description**

• EP 0698959 A